# EUROPEAN PATENT APPLICATION

(11) **EP 4 574 752 A1**
(43) Date of publication of application: **25.06.2025**
(21) Application number: 24307194.1
(22) Date of filing: 19.12.2024
(51) Int. Cl.: C01B 3/38, B01D 53/04, B01D 53/22, B01D 53/26, C01B 3/48, C01B 3/50, C01B 3/56, B01D 53/047

(54) **SYNGAS DRYING INTEGRATED WITHIN A HYDROGEN PLANT**

(30) Priority: 22.12.2023 FR 2315086
(71) Applicant: Technip Energies France, 92741 Nanterre Cedex (FR)
(72) Inventor: ELSEVIERS, Wim, 92741 Nanterre Cedex (FR)
(74) Representative: Edson, Russell Gregory

(57) **Abstract**

A method for recovering waste heat and water vapor from a dryer system integrated in a hydrogen plant is described. The method includes receiving regeneration gas from a downstream unit of the hydrogen plant; using heat from the hydrogen plant to heat at least a part of the regeneration gas and form spent regeneration gas through a heating step and a cooling step; recycling spent regeneration gas back to the hydrogen plant that uses heat from the spent regeneration gas; and using desorbed water in the spent regeneration gas as process steam in the hydrogen plant.

## Description

### Technical Field

The present disclosure relates to a method. Aspects of the invention relate to a method and a hydrogen plant.

### Background

Hydrogen plants based on steam reforming of hydrocarbons use a reforming process that converts a hydrocarbon feed into a syngas containing primarily hydrogen, carbon monoxide, and carbon dioxide, with the aid of steam. Some residual unconverted hydrocarbons may be present in the form of methane. Some inert gases, such as helium, nitrogen or argon, can be present when the inert gases are introduced with the hydrocarbon feed or with the oxygen feed in case oxidative reforming is used. While the excess steam or water can be removed by cooling and condensation, doing so may not be sufficient for the further treatment of the syngas stream. For example, when the syngas stream is to be treated further in a cryogenic system involving sub-zero temperatures, there is a risk that water may freeze. Water can be removed upstream of the cryogenic section to residual levels that avoid freezing at cold temperatures using a temperature-swing adsorption process.

In a temperature-swing adsorption process, the to-be-dried stream is contacted with a solid adsorbent material that has a high affinity for water but lower affinity for any other stream component at low (e.g., near-ambient) temperatures. Examples of the solid adsorbent material can include an activated alumina, silica gel, activated carbon, or molecular sieve. The solid adsorbent material can selectively remove the water from the feed stream by adsorption and produce a dry product stream that can be treated in a downstream cryogenic process. When the solid adsorbent is subsequently heated to higher temperatures, its affinity to retain the water is reduced such that the adsorbed water can be stripped from the adsorbent via regeneration at high temperature. Typically, another gas stream at high temperature is used to heat up the solid adsorbent and carry out the stripped water. After an adsorbent bed is fully regenerated, it can be cooled back to near-ambient conditions with a dry stream at low temperature to subsequently re-enter another adsorption phase to remove water from the feed gas stream.

The temperature-swing adsorption process may involve at least two adsorber vessels. One vessel may be exposed to wet feed gas to adsorb the moisture content to produce a dry treated gas stream. Another vessel can be heated to strip the adsorbed moisture and then can be cooled back to adsorption temperature. Heating the vessel can involve a gas stream at high temperature. After having heated the solid adsorbent, the gas stream then leaves the vessel loaded with water which has desorbed from the solid adsorbent during the heating. Cooling the vessel can involve a cold, dry gas stream that cools the bed without adding additional moisture.

A slipstream of the treated dry product gas can be used as regeneration gas. The stream can be heated, passed through the bed to strip off adsorbed moisture, and then cooled while water is condensed and removed. The saturated, spent regeneration gas can be recycled to the feed gas entering a bed in adsorption to avoid loss of treated product gas. Cooling can be performed with dry product gas. The cold cooling gas can be heated by the hot adsorbent bed and then cooled before it is recycled to the feed gas side. In some large dryer systems, heating and cooling can be accomplished in parallel in separate vessels, such as in systems having at least three vessels. A recycle compressor may be used on treated product gas used as regeneration gas to overcome the pressure losses in the regeneration section in case the regeneration gas is recycled as feed gas.

Some dryer systems can use a different dry gas as regeneration gas instead of using a slipstream of the product gas. Examples include dryer systems used in the product recovery sections of ethylene-cracking plants and propane-dehydration plants, in which a dry stream generated in the cryogenic separation section is used instead. The same stream can be used for heating and cooling.

As a result of the requirements for regenerating the solid adsorbent through heating and cooling, and disposal of the desorbed water, temperature-swing adsorption units involve additional equipment for heating the regeneration gas, cooling the spent regeneration gas, and removing water from the spent regeneration gas. Heating regeneration gas consumes energy with an associated carbon footprint through generating heat. In addition, recycling spent regeneration gas involves cooling and rejecting desorbed water, which may be discarded to a plant wastewater system.

### Statements

According to an aspect, there is provided a method for recovering waste heat and water vapor from a dryer system integrated in a hydrogen plant, the method comprising: receiving regeneration gas from a downstream unit of the hydrogen plant; using heat from the hydrogen plant to heat at least a part of the regeneration gas and form spent regeneration gas through a heating step and a cooling step; recycling spent regeneration gas back to the hydrogen plant that uses heat from the spent regeneration gas; and using desorbed water in the spent regeneration gas as process steam in the hydrogen plant.

The method optionally comprises producing a syngas by reacting a hydrocarbon feed with steam in a reforming section and with heat from a fired heater that outputs a flue gas stream.

The method optionally comprises recovering heat from the flue gas stream in a convection section and using heat recovered from the flue gas stream to generate steam and to provide heat for processes.

The method optionally comprises cooling the syngas to generate steam or exchange heat for other process streams and subjecting the syngas to at least one step of water gas shift reaction conversion.

The method optionally comprises subsequent or concurrent to cooling the syngas, removing condensate from the syngas to form a water-saturated syngas stream and a process condensate stream.

The method optionally comprises feeding the water-saturated syngas stream to a hydrogen and carbon dioxide (CO2) recovery section that generates, from the water-saturated syngas stream, a hydrogen-rich product stream, a CO2-rich product stream, and at least one additional product stream, wherein the hydrogen and CO2 recovery section includes the dryer system.

The method optionally comprises feeding at least part of the at least one additional product stream to a membrane system of the hydrogen and CO2 recovery section to generate a hydrogen-rich permeate stream and a hydrogen-depleted retentate stream.

The method optionally comprises heating the hydrogen-depleted retentate stream from the membrane system using heat from the hydrogen plant to form a hot regeneration gas for the dryer system to be used as the regeneration gas in the heating step of regeneration.

The method optionally comprises feeding the hydrogen-rich permeate stream from the membrane system to the dryer system as the regeneration gas to be used during the cooling step of regeneration.

The method optionally comprises recycling spent hot regeneration gas containing the desorbed water from the heating step of the dryer system to an inlet of the reforming section of the hydrogen plant to recover heat and desorbed water as process steam from the hot regeneration gas.

The method optionally comprises recycling spent regeneration gas from the cooling step of the dryer system to be used as fuel in the fired heater to recover heat as pre-heated fuel.

The method may further comprise treating a hydrocarbon feed in a feed pre-treatment section of the hydrogen plant to remove impurities in the hydrocarbon feed upstream of the reforming section.

The dryer system may be a temperature-swing adsorption dryer system.

The temperature-swing adsorption dryer system may include a plurality of adsorber vessels. Each adsorber vessel of the plurality of adsorber vessels may be associated with a plurality of sequencing valves.

The plurality of sequencing valves may include a first valve for a feed gas inlet; a second valve for a dry product gas outlet; a third valve for a hot generation gas inlet; a fourth valve for a spent hot regeneration gas outlet; a fifth valve for a cold regeneration gas inlet; and a sixth valve for a spent cold regeneration gas outlet.

The temperature-swing adsorption dryer system may include a plurality of common sequencing valves and a plurality of common control valves.

The plurality of common sequencing valves may comprise: a first common valve for a hot generation gas inlet from battery limit; a second common valve for a spent hot regeneration gas outlet to the battery limit; a third common valve for a cold fuel gas inlet from the battery limit; a fourth common valve for a spent cold fuel gas outlet to the battery limit; a fifth common valve for a dryer system bypass for hot regeneration gas; and a sixth common valve for a dryer system bypass for cold regeneration gas.

The plurality of common control valves may comprise: a first common control valve that is a pressurization control valve; a second common control valve that is a first depressurization control valve used prior to heating; and a third common control valve that is a second depressurization control valve used prior to cooling.

The hydrogen and CO2 recovery section may comprise a pressure-swing adsorption (PSA) unit.

The hydrogen and CO2 recovery section may comprise a PSA gas compressor.

The hydrogen and CO2 recovery section may comprise a PSA purge gas cooling system.

The hydrogen and CO2 recovery section may comprise a CO2 recovery and purification section.

The PSA unit may receive the water-saturated syngas stream and generate the hydrogen-rich product stream and a PSA purge gas stream.

The PSA gas compressor may compress the PSA purge gas stream.

The PSA purge gas cooling system may cool the compressed PSA purge gas stream to feed to the dryer system.

The CO2 recovery and purification section may receive product gas from the dryer system and generate the CO2 product stream and the at least one additional product stream.

The PSA unit may be a three product PSA unit. The PSA unit may receive the water-saturated syngas stream and generate the hydrogen-rich product stream, a PSA purge gas stream and a third product stream used for cooling the dryer system and/or as fuel in a fired heater of the hydrogen plant.

The PSA unit may be a two-feed, three product PSA unit. The PSA unit may receive a first feed stream and a second feed stream at different pressure levels, and may generate three product streams at different pressure levels.

The PSA unit may receive the water-saturated syngas as a first feed stream and a hydrogen-rich gas as a second feed stream. The PSA unit may generate the hydrogen-rich product stream, a PSA purge gas stream and a third product stream that is used for cooling in the dryer system.

The second feed stream of the PSA unit may be at a lower pressure than the first feed stream.

The hydrogen-rich product stream may be generated at a pressure greater than the PSA purge gas stream and the third product stream. The third product stream may have a pressure greater than the PSA purge gas stream.

According to a further aspect, there is provided a dryer system integrated in the hydrogen plant configured to perform the method of the previous aspect. The dryer system may be configured to carry out any process steps described herein.

According to a further aspect, there is provided a hydrogen plant comprising an integrated dryer system, the dryer system comprising: at least one adsorbent bed configured to receive a feed stream containing water and adsorb at least part of the water to produce a water-depleted product stream; a regeneration section configured to heat at least one adsorbent bed to desorb at least part of the water from the adsorbent bed and configured to cool the adsorbent bed after desorbing at least part of the water therefrom; one or more regeneration gas inlet line arranged to fluidly couple a unit of the hydrogen plant to the dryer system so as to transfer regeneration gas from the hydrogen plant to the regeneration section for heating or cooling the adsorbent bed to form a spent regeneration gas containing desorbed water; at least one recycle line arranged to couple the dryer system to one or more units of the hydrogen plant so as to transfer spent regeneration gas and desorbed water from the dryer system to the hydrogen plant such that heat and desorbed water from the spent regeneration gas can be used in the hydrogen plant.

The hydrogen plant and/or the dryer system may be configured to carry out any and all of the process steps described herein. According to a further aspect, there is provided a method for recovering waste heat and water vapor by a dryer system integrated in a hydrogen plant, the method comprising; receiving regeneration gas from a downstream unit of the hydrogen plant; using heat from the hydrogen plant to heat the regeneration gas and form spent regeneration gas through a heating step and a cooling step; recycling spent regeneration gas back to the hydrogen plant that uses heat from the spent regeneration gas and the cooling step; and using desorbed water from the spent regeneration gas as process steam in the hydrogen plant.

The method may further comprise: treating a hydrocarbon feed in a feed pre-treatment section of the hydrogen plant to remove impurities in the hydrocarbon feed to form a pre-treated hydrocarbon feed; producing a syngas by mixing the pre-treated hydrocarbon feed with steam in a reforming section and with heat from a fired heater that outputs a flue gas stream; recovering heat from the flue gas stream in a convection section and using heat recovered from the flue gas stream to generate steam and to provide heat for processes; cooling the syngas to generate steam or exchange heat for other process streams and subjecting the syngas to at least step of a water gas shift reaction conversion; subsequent or concurrent to cooling the syngas, removing condensate from the syngas to form a water-saturated syngas stream and a process condensate stream; feeding the water-saturated syngas stream to a hydrogen and carbon dioxide (CO2) recovery section that includes the dryer system that generates, from the water-saturated syngas stream, a hydrogen-rich product stream, a CO2-rich product stream, and at least one additional product stream; feeding at least part of the at least one additional product stream to a membrane system of the hydrogen and CO2 recovery section to generate a hydrogen-rich permeate stream and a hydrogen-depleted retentate stream; heating the hydrogen-depleted retentate stream from the membrane system to form a hot regeneration gas for the dryer system to be used in a heating phase of regeneration; feeding the hydrogen-rich permeate stream from the membrane system to the dryer system as regeneration gas to be used during a cooling phase of regeneration; recycling spent hot regeneration gas from the heating phase of the dryer system to an inlet of the reforming section of the hydrogen plant; and recycling spent regeneration gas from the cooling phase of the dryer system to be used as fuel in the fired heater.

The dryer system may be a temperature-swing adsorption dryer system that includes a plurality of adsorber vessels, each adsorber vessel of the plurality of adsorber vessels being associated with a plurality of sequencing valves.

The plurality of sequencing valves may include: a first valve for a feed gas inlet; a second valve for a dry product gas outlet; a third valve for a hot generation gas inlet; a fourth valve for a spent hot regeneration gas outlet; a fifth valve for a cold regeneration gas inlet; and a sixth valve for a spent cold regeneration gas outlet.

The temperature-swing adsorption dryer system may include a plurality of common sequencing valves and a plurality of common control valves.

The plurality of common sequencing valves may comprise: a first common valve for a hot generation gas inlet from battery limit; a second common valve for a spent hot regeneration gas outlet to the battery limit; a third common valve for a cold fuel gas inlet from the battery limit; a fourth common valve for a spent cold fuel gas outlet to the battery limit; a fifth common valve for a dryer system bypass for hot regeneration gas; and a sixth common valve for a dryer system bypass for cold regeneration gas, wherein the plurality of common control valves comprises: a first common control valve that is a pressurization control valve; a second common control valve that is a first depressurization control valve used prior to heating to purge gas recycle compressor last stage suction; and a third common control valve that is a second depressurization control valve used prior to cooling to purge gas recycle compressor at least one stage suction inlet.

The hydrogen and CO2 recovery section may further comprise: a pressure-swing adsorption (PSA) unit; a PSA gas compressor; a PSA purge gas cooling system; and a CO2 recovery and purification section.

The PSA unit may be a two-feed, three product PSA unit.

According to a further aspect, there is provided a dryer system integrated in the hydrogen plan configured to perform the method of the previous aspect.

The dryer system may be configured to perform any of the process steps as described herein.

### Brief Description of the Drawings

One or more examples will now be described, by way of example only, with reference to the accompanying drawings, in which:
Figure 1 shows a schematic block diagram of a hydrogen plant according to an example of the disclosure;
Figure 2 shows a block diagram schematic of a hydrogen plant according to an example of the disclosure;
Figure 3 is a chart showing a temperature-swing adsorber dryer cycle according to an example of the disclosure;
Figure 4 is a schematic diagram of a dryer system according to an example of the disclosure;
Figure 5 shows a block diagram of a pressure swing adsorption (PSA) unit according to an example of the disclosure;
Figure 6 shows a block diagram of a hydrogen plant according to an example of the disclosure.

### Detailed Description

Certain aspects and features of the present disclosure relate to a syngas dryer system integrated in a hydrogen plant that can reduce equipment count for the hydrogen plant and that can recover waste heat and water vapor that are otherwise lost in non-integrated dryer processes. For example, regeneration gas can be taken from a downstream unit after processing the treated dry product gas stream rather than from a treated dry product gas stream. Regeneration gas for heating and cooling can be taken from different sources. The heat for regeneration heating the regeneration gas can be supplied from the hydrogen plant. Spent regeneration gas can be recycled back to the hydrogen plant and the heat from the spent regeneration gas can be recovered in the hydrogen plant to reduce the amount of heating energy used, which can reduce the carbon intensity of the overall hydrogen plant. Furthermore, not cooling the spent regeneration gas in the dryer system reduces the cooling requirements of the dryer system. Heat from the spent regenerating gas that is picked up during cooling can be used in the hydrogen plant to reduce the amount of firing, which can also reduce the overall carbon intensity of the hydrogen plant. Desorbed water carried out with the spent regeneration gas can be used as process steam in the hydrogen plant instead of being sent to a waste system. By using some examples of the disclosure such as integrating heating the regeneration gas stream within the hydrogen plant process flow scheme, the equipment count in the hydrogen plant can be reduced as a spent regeneration gas cooler and condensate removal system may not be required.

As another example, dry product gas generated by a pressure-swing adsorption (PSA) unit can be used as regeneration gas for a dryer system treating the compressed purge gas generated by the same PSA unit. Similarly, dry product gas from a first PSA unit can be used as regeneration gas for the dryer system processing the compressed purge gas of a second PSA unit.

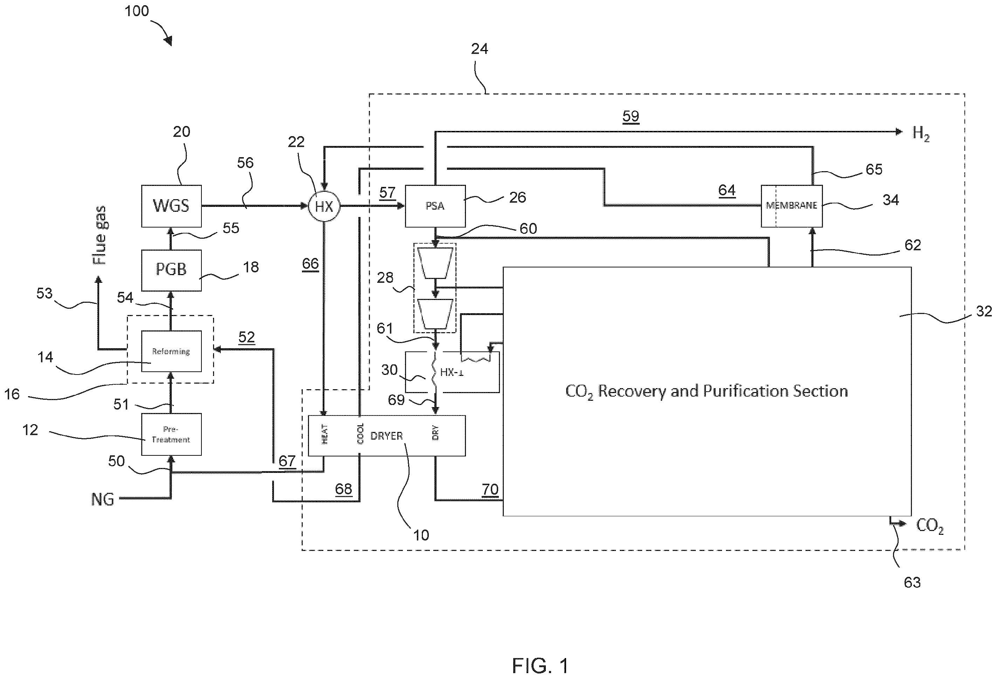

Figure 1 is a schematic block diagram of a dryer system 10 that can be integrated in a hydrogen plant 100 according to one example of the disclosure. The integrated syngas dryer system 10 uses temperature-swing adsorption and is part of a hydrogen plant 100. The hydrogen plant 100 can include:
- A pre-treatment subsystem 12 that is configured to treat a hydrocarbon feed 50 to remove impurities that can damage downstream catalysts. Non-exhaustive examples of impurities can include sulfur, halogens, chlorides, and mercury. The hydrocarbon feed stream 50 may include fresh feed (labelled NG in the figures) and/or hydrocarbons from one or more recycle lines from elsewhere in the plant 100 as will be discussed in more detail. The pre-treatment subsystem 12 may generate a pre-treated hydrocarbon feed stream 51.
- A reforming section 14 configured to receive a hydrocarbon feed and mix it with steam to cause the mixture to react in the reforming section 14 to produce a syngas stream 54. The hydrocarbon feed may be provided from a hydrocarbon feed stream 50 (for example containing fresh and/or recycled hydrocarbons). In arrangements in which the pre-treatment subsystem 12 is provided, the hydrocarbon feed may be or include the pre-treated hydrocarbon stream 51 from the pre-treatment subsystem 12. The reforming section 14 can include one or more of pre-reforming, steam-methane reforming, heat-exchange reforming, or auto-thermal reforming.
- A fired heater 16, represented by a dotted line around the reforming section 14, can supply at least part of the heat of reaction for the reforming section 14 by combusting a fuel stream 52 with a stream containing an amount of oxygen (not shown) to achieve complete combustion. The fired heater 16 generates a hot flue gas stream 53 that exits the fired heater 16.
- A flue gas convection section (not shown in Figure 1) can recover heat from the hot flue gas stream 53 from the fired heater 16 and can use the heat to generate steam and/or heat other process streams in the hydrogen plant 100 and/or to provide heat for endothermic reactions (for example in the reformer section 14).
- A heat recovery system, which can be or include a process gas boiler 18, represented as "PGB" in Figure 1, can use syngas, for example the syngas stream 54, from the reforming section 14 to cool down to generate steam and/or exchange heat with respect to other process streams. The heat recovery system (for example the process gas boiler 18) generates a cooled syngas stream 55.
- A water-gas shift (WGS) section 20, represented as "WGS" in Figure 1, to receive syngas from the heat recovery system (for example via the cooled syngas stream 55) and apply at least one step of water-gas-shift reaction conversion to the syngas. The water-gas shift can include capabilities, such as at least one of the high temperature shift, medium temperature shift, low temperature shift, and isothermal shift. The WGS section 20 can generate a shifted syngas stream 56.
- A heat exchanger 22, represented as "HX" in Figure 1, can cool syngas from the WGS section 20 (for example from the shifted syngas stream 56) and can remove condensate from the syngas, to produce a water-saturated syngas stream 57 and a process-condensate stream (not shown). The heat exchanger 22 may be provided as part of the heat recovery system. The heat exchanger 22 may include a knock-out drum configuration to remove condensate from the syngas.
- The heat recovery system can include other heat exchangers to recover heat to other streams in the hydrogen plant 100, including pre-heating demineralized water, generating low-pressure steam, pre-heating hydrocarbon feed 50, and can include one or more stages of condensate removal. These arrangements are known to a person skilled in the art and therefore not shown in Figure 1.
- A hydrogen and carbon dioxide (CO2) recovery section 24 can be arranged to receive the water-saturated syngas stream 57 from the heat exchanger 22. The hydrogen and CO2 recovery section 24 can include a dryer system 10, and/or a pressure-swing adsorption (PSA) unit 26 (represented as "PSA" in Figure 1). The PSA unit 26 may be configured to generate at least a hydrogen-rich product stream 59 and a hydrogen-depleted purge gas stream 60. The hydrogen and CO2 recovery section 24 may include a PSA purge gas compressor (shown below the PSA unit in Figure 1) 28. The compressor 28 may be provided downstream of the PSA unit 26. The compressor 28 may be configured to increase the pressure of the hydrogen-depleted purge gas stream 60 from the PSA unit 26 to form a compressed hydrogen-depleted purge gas stream 61. The hydrogen and CO2 recovery section 24 may include a PSA purge gas cooling unit and condensate removal system 30 (represented as "HX-1" in Figure 1). The dryer system 10 is a temperature-swing adsorption dryer system 10 in some arrangements. A CO2 recovery and purification section 32 may be included that can use condensation and separation at sub-zero temperatures. The recovery section 24 may include a membrane system 34.
   o The CO2 recovery and purification section 32 can generate at least a hydrogen-rich product stream 62 that is depleted in CO2 and a CO2-rich product stream 63 that is depleted in hydrogen and that is CO2 enriched. In some cases. The CO2 recovery and purification section 32 can also generate additional product streams.
   ∘ The membrane system 34 can be fed with the hydrogen-rich product stream 62. The membrane system 34 can be configured to permeate hydrogen, generating a hydrogen-rich permeate stream 64 and a hydrogen-depleted retentate stream 65.
   o The hydrogen-depleted retentate stream 65 from the membrane system 34 can be heated in the heat exchanger 22 to form a hot regeneration gas stream 66 for the dryer system 10 to be used during the heating phase of its regeneration. Spent hot regeneration gas from the heating phase of the dryer regeneration process can exit the dryer system 10 as a spent hot regeneration gas stream 67 and be recycled to the inlet of the pre-treatment subsystem 12 and/or to the inlet of the reforming section 14 of the hydrogen plant.
   ∘ The hydrogen-rich permeate stream 64 from the membrane system 34 can be fed to the dryer system 10 as regeneration gas to be used during the cooling phase of its regeneration. The spent regeneration gas from the cooling phase of the dryer regeneration process can exit the dryer system 10 as a spent regeneration gas stream 68 and can be used as fuel in the fired heater 16, for example mixed with or forming fuel stream 52.

The hydrogen plant can include additional components, differently configured components, or other subsections or technologies. In some examples, the hydrogen and CO2 recovery section 24 includes one or more of a PSA selective for hydrogen, a PSA selective for CO2, a cryogenic vapor-liquid separation, a solvent absorption system (for example a solvent absorption system selective for CO2), a membrane selective for hydrogen, a membrane selective for CO2, a temperature-swing adsorption unit, and a vacuum PSA unit.

In a particular example, the hydrogen and CO2 recovery section 24 includes:
- A PSA unit 26 selective for hydrogen that can produce a hydrogen-rich product stream 59 and at least a second stream 60 rich in CO2 and depleted in hydrogen.
- A PSA purge gas compressor 28 that can compress the second stream 60 rich in CO2 to form a compressed stream 61 rich in CO2.
- A chiller system that can cool the compressed stream 61 from the compressor 28 to condense and remove part of its water content in a two-phase separator to form a cooled stream 69 rich in CO2. The chiller system may be the PSA purge gas cooling unit and condensate removal system 30.

- A temperature-swing adsorption unit (for example the drying unit 10) that can remove remaining water from the second stream rich in CO2 (for example from the cooled stream 69 that has been cooled by the chiller system 30) to produce a water-depleted product stream 70.
- A cryogenic separation unit (for example forming a part of the CO2 recovery and purification section 32) that can generate, from the water-depleted product stream 70, at least a product stream rich in CO2, for example the hydrogen-depleted and CO2-rich product stream 63 and a stream that includes residual components, for example the hydrogen-rich and CO2-depleted product stream 62.

The stream 62 containing the residual components can include unrecovered hydrogen from the PSA unit 26. This stream can also include unconverted carbon monoxide and methane products from the reforming and WGS sections 14, 20 (for example the water-saturated syngas stream 57), which may also include residual inert gases such as helium and nitrogen from the hydrocarbon feed and argon from oxygen used in an auto-thermal reforming step. The membrane unit 34, selective for the permeation of hydrogen, can separate this stream 62 into two product streams: (1) a first permeate stream, at low pressure, enriched in hydrogen, for example hydrogen-rich permeate stream 64; and (2) a second retentate stream, for example hydrogen-depleted retentate stream 65, that can be at a pressure that is at or close to the pressure of the stream with residual components 62.

The retentate stream 65 can include unreacted methane and carbon monoxide from the reforming section 14 and the WGS section 20 (for example from the water-saturated syngas stream 57) that is fed to the H2 and CO2 recovery section 24. Optimizing the performance of the hydrogen plant 100 by recycling these unconverted components to the reforming section 14 (or the pretreatment section 12) can improve the feed conversion efficiency and can reduce the carbon dioxide emissions of the hydrogen plant 100. As the reforming reactions are endothermic, the recycle stream may be heated. In the reforming section 14, the recycle stream can be mixed with steam for the reforming reactions to occur. The steam can be generated from make-up demineralized water. Both the generation of steam as well as the heating of process gas involve heat that is directly (by direct heating in coils of the fired heater 16) or indirectly (recovering heat from the flue gas and/or process gas in the heat recovery section) supplied by the combustion of fuel in the fired heater. A reduction in fuel requirements can therefore reduce the carbon dioxide emissions and carbon intensity of the fired heater and thus the overall hydrogen plant 100.

As noted above, a temperature-swing adsorption process can take place in the dryer system 10. The temperature-swing adsorption process involves regeneration by heating and cooling adsorbent beds of the adsorption unit. The dryer system 10 can be configured to perform the steps method described herein, for example a drying step which includes adsorption, and a regeneration step which may include the heating and the cooling step. The dryer system 10 includes at least one adsorbent bed configured to receive a feed stream containing water and adsorb at least part of the water to produce a water-depleted product stream. The dryer system 10 may include a feed inlet coupled to the hydrogen plant 100, for example coupled to the chiller system 30 to receive the cooled stream rich in CO2 69. The dryer system 10 may include an outlet to direct the water-depleted product stream away from the system 10, for example the outlet may direct the water-depleted product stream 70 to the CO2 recovery and purification section 63.

The dryer system 10 includes a regeneration section configured to heat at least one adsorbent bed to desorb at least part of the water from the adsorbent bed and configured to cool the adsorbent bed after desorbing at least part of the water therefrom. The regeneration section may include cooling and heating sections. The heating section may be configured to perform the heating step. The cooling section may be configured to perform the cooling step. The heating and/or cooling sections may include a configuration of lines and/or vessels that are configured to direct the desired regeneration gas to the appropriate location of the dryer system 10 during the desired step of the process. During the heating step, a hot gas can be admitted to a vessel of the dryer unit 10, thereby heating the vessel and adsorbent material (for example the adsorbent bed) in the vessel. As the temperature increases, the equilibrium capacity of the adsorbent material (e.g. molecular sieve 4A or equivalent) can reduce, and this gradually releases or desorbs adsorbed moisture into the hot gas mixture passing over the adsorbent bed. While the bulk of the moisture may desorb at temperatures around 100 °C, to promote a complete regeneration, temperatures of 250-270 °C can be used. The dryer system 10 includes a first regeneration gas inlet line arranged to fluidly couple a unit of the hydrogen plant 100 to the dryer system 10 so as to transfer regeneration gas from the hydrogen plant to the regeneration section for heating the adsorbent bed to form a spent regeneration gas containing desorbed water. The gas inlet line may be coupled between the heating section of the dryer system 10 and the heat exchanger 22 to transfer the hot regeneration gas stream 66 to the adsorber vessel for the heating step. The spent regeneration gas may be spent hot regeneration gas stream 67 which can contain desorbed water from the adsorbent bed in the adsorber vessel in the heating step.

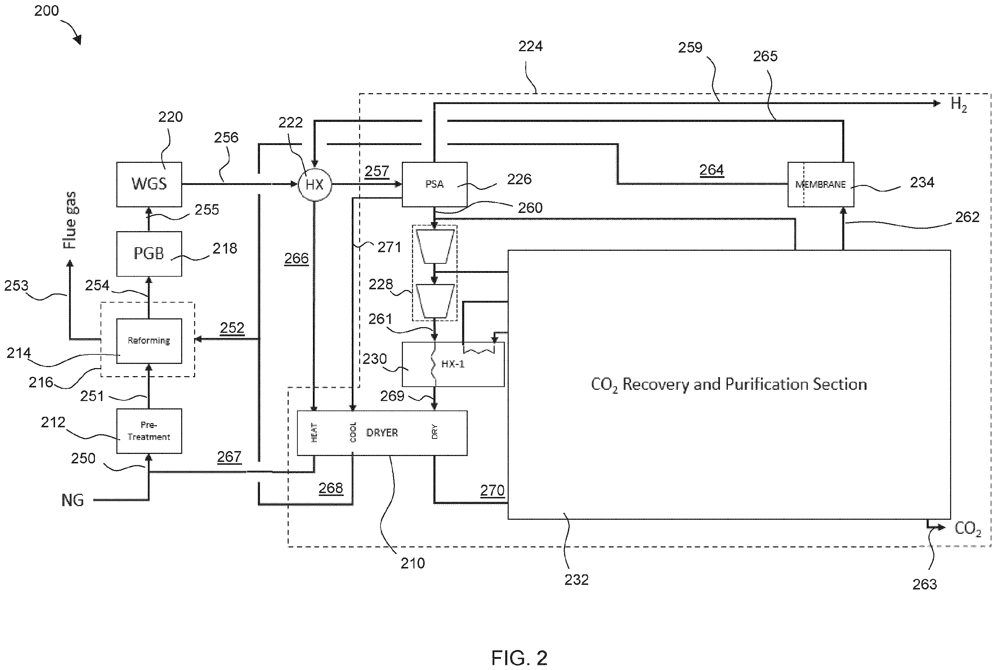

After the heating step is completed, the cooling step can be executed. A cold gas can be admitted to the hot vessel and can gradually absorb the heat that is contained in the hot adsorbent material by convective heat transfer to the gas flowing over the solid adsorbent. The cooling medium can enter cold and can be heated up by the hot adsorbent bed until the adsorbent bed is cooled down to a temperature close to the temperature of the cooling medium. The dryer system 10 includes a second regeneration gas inlet line arranged to fluidly couple a unit of the hydrogen plant 100 to the dryer system 10 so as to transfer cold regeneration gas from the hydrogen plant to the regeneration section for cooling the adsorbent bed to form a spent regeneration gas. The second gas inlet line may be coupled between the cooling section of the dryer system 10 and the membrane 64 (for example to transfer hydrogen rich permeate stream 64 to the adsorber vessel in the cooling step) to transfer the cool gas stream 64 to the adsorber vessel in the cooling step or phase. In alternative arrangements, the second gas inlet line may couple the cooling section of the dryer system 210 to a different type of PSA system, for example as will be discussed in more detail with reference to Figure 2. The cooling step or phase is configured to generate spent regeneration gas 68. When the adsorber vessel undergoing regeneration has reached the temperature of the cooling medium, the cooling step is completed, and the adsorber vessel can re-enter the next adsorption step. In case the ongoing adsorption step (taking place in another adsorber vessel) has not yet completed, a stand-by phase can be included, during which the freshly regenerated vessel is idle and not exchanging any streams with the outside.

The spent regeneration gas 67 from the heating step can carry heat from the adsorber vessel and may carry desorbed moisture during at least part of the duration of the heating step. The retentate 65 from the membrane 34 can be heated in the heat exchanger 22 of the heat recovery section. The heated retentate (for example the hot regeneration gas stream 66) can be used as regeneration gas for the heating step. This allows a recovery of the remaining heat from the spent regeneration gas stream 67 in the reforming section when the spent regeneration gas is recycled to the feed of the reforming section 14 or the pretreatment system 12. Furthermore, the desorbed moisture can remain in the retentate (for example the spent regeneration gas) and does not need to be cooled and condensed out of the spent regeneration gas stream. Instead, the desorbed moisture can act as process steam in the reforming reactions and generate some additional hydrogen while slightly reducing the amount of make-up water required for making process steam. The dryer system 10 includes at least one recycle line to couple the dryer system 10 to one or more units of the hydrogen plant 100 so as to transfer spent regeneration gas and desorbed water from the dryer system 10 to the hydrogen plant 100 such that heat and desorbed water from the spent regeneration gas can be used in the hydrogen plant. For example, a first recycle line may extend between the heating system and the pre-treatment unit 12 and/or reforming unit 14 to recycle the spent hot regeneration gas 67 and desorbed water thereto.

Since the spent regeneration gas stream 67 does not need to be cooled down or condensate to be knocked out to recycle the spent regeneration gas 67 back to the feed inlet of the reforming section 14, equipment, such as a recycle gas blower, a spent regeneration gas cooler and spent regeneration gas knock out drum, can be eliminated. Also, the size of the dryer adsorber vessels can be reduced to a size suited for treating only the net feed gas flow, rather than being sized for the net feed gas flow plus the regeneration gas flow rate. The regeneration gas flow rate may be 10% to 15% of the net feed gas flow. The reduction in size can be considerable for large dryer systems.

As the permeate stream 64 from the membrane unit 34 is hydrogen-rich and essentially free of carbon molecules, it is a clean low-carbon fuel that releases no or only a minimum quantity of carbon dioxide during combustion. Fuel preheating for the fired heater 16 can reduce the carbon intensity of the combustion process, as fuel pre-heating reduces the amount of fuel to be consumed to reach the combustion temperature of the fuel mixture. Fuel pre-heating can reduce fuel consumption and thereby further reduce the carbon intensity of the process. Using the permeate stream from the membrane 34 as the cooling medium during the cooling step of the dryer cycle allows recovering the heat from the hot adsorber vessel and pre-heating of the fuel prior to use in the fired heater 16, thereby lowering the total fuel demand and carbon intensity of the hydrogen plant 100. For this reason, a second recycle line may extend between the adsorber vessel in the cooling step of the dryer system 10 and the fired heater 16 to recycle the spent regeneration gas 68 for use as a fuel in the fired heater 16.

In some examples of the disclosure, a different process flow scheme may be used for specific components of the hydrogen and CO2 recovery section. Figure 2 is a block diagram schematic of a hydrogen plant 200. The hydrogen plant 200 is similar to that discussed in relation to Figure 1, and so only the differences will be outlined in detail. Similar units will be labelled with the same reference numeral, but with the prefix "2". The PSA unit of the hydrogen plant 200 is a three-product PSA unit 226 according to one aspect of the present disclosure.

The three-product PSA unit 226 is configured to generate a first hydrogen product stream 259, along with a purge gas stream 260 (for example a hydrogen-depleted product stream) that is sent for further treatment and CO2 recovery. A third product stream 271 is generated during a co-current depressurization step. The third product stream 271 contains rejected inert gas components and hydrogen that can be used as low-carbon fuel. In this example, the third PSA product stream 271 may be used together with, or instead of, the permeate stream 264 from the membrane 234 as a cooling medium for the dryer process in the dryer unit 210 to form a spent regeneration gas stream 268 for use in the fuel stream 252 of the fired heater 216.

In other examples, other fuel streams can be generated within the hydrogen and CO2 recovery section 224 to be used as a cooling medium for the temperature-swing adsorber dryer system 210, and subsequently provided as fuel to the fired heater 216 of the hydrogen plant 200. The streams can be a low-carbon fuel gas stream rich in hydrogen (greater than 90% mole, such as greater than 95% mole), low temperature, such as near ambient or slightly cooled (e.g., 15 °C to 40 °C), and can be one that does not contain water or only a minimum amount (such as a part per million level or less).

While initially the temperature of the heated fuel gas stream 268 can be high (e.g., above 200 °C, above 150 °C, or above 130 °C), the temperature can reduce as the cooling step in the dryer unit 210 continues. As soon as the temperature of the fuel gas stream 268 drops below the temperature of the process gas in the cooling train upstream of the hydrogen and CO2 recovery section 224, it can be used to further cool the process gas while picking up low-level heat that would otherwise be dissipated to the process gas air cooler that is part of the heat recovery section 222 of the hydrogen plant 200. The temperature of the fuel gas stream 268 can be controlled at a minimum value that exceeds the temperature of the fuel gas stream entering the adsorber vessel of the dryer system 210 on regeneration / cooling. This can be extended during the time that the regenerated vessel would be in a standby phase pending to return to the next adsorption step.

The second gas inlet line of the dryer unit 210 may couple the cooling section of the dryer system 210 and the three-product PSA system 226 to transfer the third product stream 271 to the adsorber vessel in the cooling step. The cooling step or phase is configured to generate the spent regeneration gas stream 268. The second recycle line may extend between the adsorber vessel in the cooling step of the dryer system 210 and the fired heater 216 to recycle the spent regeneration gas stream 268 for use as a fuel in the fired heater 216.

The pressure levels of the inlet stream to the dryer system 210 (for example cooled stream 69, 269 rich in CO2) and the two streams used for the regeneration can be quite different. The inlet stream 269 to the dryer system 210 can be at high pressure, 45 bar g to 75 bar g and typically around 55 bar g. The retentate stream 266 for heating can have a pressure close to this pressure, such as 3 bar to 5 bar lower. The fuel stream for cooling (for example third product stream of the PSA 271 in Figure 2 or hydrogen-rich permeate stream 64 in Figure 1) can be at a much lower pressure, such as in the order of 2 bar g to 10 bar g and typically 3 bar g when used as third product stream 271 from a three-product PSA, or 8 bar g as a typical value as a permeate stream 64, 264, or 0.5 bar g when using PSA purge gas 60, 260 as regeneration gas. It will be appreciated that any of the configurations of Figure 1 may be applied in the example of Figure 2, and vice versa.

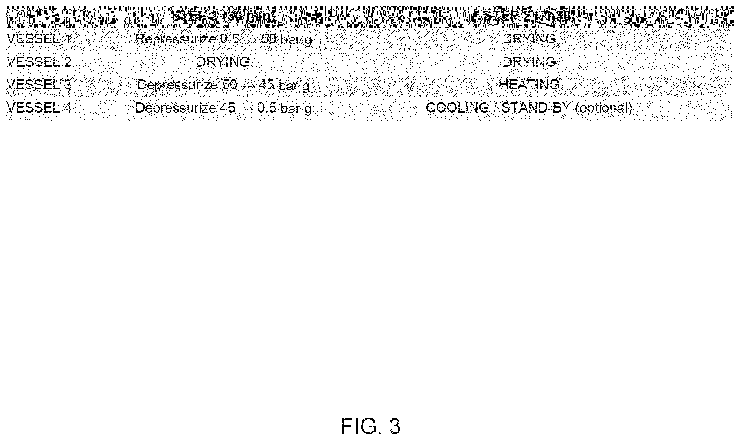

Figure 3 is a chart showing a temperature-swing adsorber dryer cycle according to one example of the present disclosure, in which the pressure of stream 69 is 50 bar g, regeneration during heating step is carried out with hot retentate at 45 bar g, and regeneration during the cooling step is carried out with cold permeate at 1.5 bar g. The dryer system 10, 210 of Figures 1 and 2 may be configured to perform the steps of the cycle of Figure 3.

The temperature-swing adsorber dryer cycle in Figure 3 involves four dryer vessels that are part of a cyclic process. Switching valves can be installed to direct the gas flows to and from the individual vessels, according to the requirements of the particular process step. The process can use at least four beds to ensure continuous operation. The cycle times are illustrative and different times may be used in accordance with the disclosure to, for example, optimize for each individual installation. The pressure levels used are also illustrative and other pressure levels can be used to optimize for each individual installation.

The syngas to be dried (for example PSA purge gas stream 60) can be compressed from low pressures, such as 0.3 bar g, to the dryer inlet pressure of, for example, 50 bar g. The compression can be performed in a multi-stage compressor 28, 228, e.g. from 0.3 bar g to 1.4 bar g, to 3.2 bar g, to 7 bar g, to 15 bar g, to 29 bar g, to 50 bar g. Intercooling and aftercooling can be performed between any two compression stages and after the last stage. Deep cooling to 10-15 °C (for example in the cooling unit 30) can be applied on the last stage to reduce the size of the dryer system 210.

At the end of the regeneration / cooling step, the adsorber vessel can still be at the lowest pressure in the cycle - that is, the pressure of the fuel gas stream that was used as a cooling medium. To avoid hydraulic upsets when the vessel is switched to the next adsorption step, the vessel can be slowly pressurized with compressed feed gas. In case the fuel gas used was at 0.5 bar g, the bed can be pressurized from 0.5 to 50 bar g. In alternative arrangements, the fuel gas used may be 1.5 bar g to reduce issues with pressure drop in the fuel line. In this case, the bed can be pressurized from 1.5 to 50 bar g. Allowing 15 minutes to pressurize the bed may consume approximately 3.5% of the feed to the dryer beds. Extending the time to 30 minutes may further reduce this flow fraction to less than 2%.

Before the regeneration / heating step can start, the saturated dryer bed to be regenerated can be depressurized to approximately 45 bar g to avoid hydraulic upsets when connecting to the hot retentate stream 65. The depressurization can be gradually performed over the same time period and simultaneously with the repressurization of the bed coming into the drying step. Depressurizing the bed from 50 to 45 bar g can release approximately 0.5 % of the feed gas to the dryer beds, that can be fed to the last stage of the compressor. During the time the bed depressurizes, hot retentate 66, from the heat exchanger 22 in the heat recovery section can be bypassing the dryer system 10 and sent directly to the hydrogen plant feed stream 50. As soon as the dryer bed has reached the target pressure for the heating step, the hot retentate 66 from the heat exchanger 22 in the heat recovery section can be admitted to the bed and start heating the bed. The spent regeneration gas 67 can be collected from the other side of the bed and further recycled to the hydrogen plant feed stream 50.

Similarly, before the regeneration / cooling step can start, the regenerated hot dryer bed can be depressurized to the fuel gas pressure of 1.5 bar g to avoid hydraulic upsets when connecting to the fuel gas stream. The depressurization can be gradually done over the same time period and simultaneously with the repressurization of the bed coming into the drying step and the depressurization of the bed coming into the heating step. Depressurizing the bed from 45 to 1.5 bar g can release approximately 2.5 % of the feed gas to the dryer beds, which can be fed to the suction of the first stage of the compressor 28. In some examples, the compressor 28 can have a design margin of 10-15 %, such that a small increase in flow may not impact the operation of the compressor 28. Furthermore, the gas quantities released during depressurization and used for repressurisation can be closely matching, such that the net required gas quantity to pressurize the beds can be negligible for the operation of the unit, resulting in a continuous flow of dry product gas from the dryer with less than 1% fluctuations over the nominal flow rate. During the time that the dryer is depressurizing, the fuel stream (for example stream 64 in Figure 1 or stream 271 in Figure 2) can bypass the dryer system 10 and may not be heated during this time by the dryer bed, although it may be further heated against low-level heat in the heat recovery section of the hydrogen plant 100 before entering the combustion system. The same can be done during any stand-by step (which may be optional) after the completion of the cooling step and prior to the start of the next adsorption step.

As soon as the dryer vessel is ready to accept the low-pressure fuel stream 64, 271 as a cooling medium, the bypass can be closed and the fuel stream 64, 271 can be admitted to cool the vessel. The heated fuel stream can exit from the opposite end of the dryer vessel and can be directed to the fuel inlet (for example as or as part of the fuel stream 52) of the fired heater 16. During the cooling step, the temperature of the fuel can gradually decrease, but the degree of fuel preheating obtained while heat can be transferred that can reduce the firing demand during that time. On average, the fuel demand for the hydrogen plant 100 can be reduced. The apparatus of the dryer system 10 can be built while making use of the integration of the dryer system 10 in the hydrogen plant 100, and the equipment required for cooling of the spent regeneration gas and removal of the condensate can be eliminated.

Temperature-swing adsorption systems for large flow rates (for example, ones at or over 100,000 Nm3/h of gas to be dried) can be designed with multiple vessels in parallel for the drying/adsorption step with two vessels in series for a continuous heating and cooling regeneration. A system according to some examples can include four adsorber vessels (two adsorbers in parallel for drying and two adsorbers in series for regeneration), which can avoid the addition of significant other equipment.

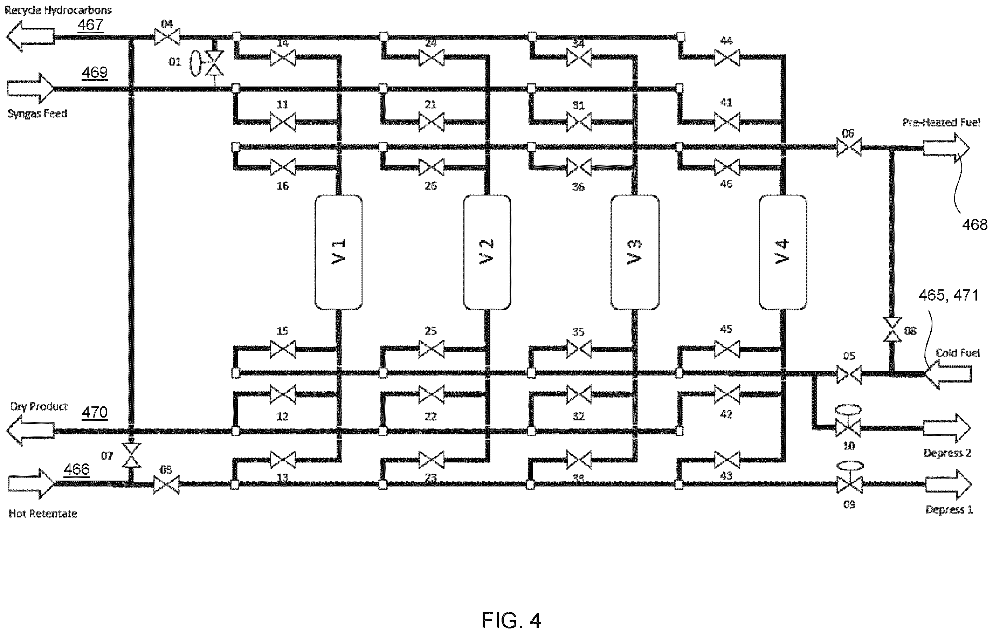

Figure 4 is a schematic diagram of a temperature-swing adsorber dryer system 310 with four vessels V1, V2, V3, V4 according to one example of the present disclosure. Figure 4 includes streams similar to those of Figure 1 and 2, which will be labelled with the same reference numeral with the prefix "4".

Each adsorber vessel V1, V2, V3, V4 of the four vessels shown in Figure 4 has six sequencing valves. The reference number of each valve indicates its function and the vessel to which it is associated belongs to. Valve tag name "XY" refers to vessel "X" (X= 1, 2, 3, 4, etc.) and has the function Y:
Y = 1 : feed gas inlet
Y = 2 : dry product gas outlet
Y = 3 : hot regeneration gas inlet
Y = 4 : spent hot regeneration gas outlet
Y = 5 : cold regeneration gas inlet
Y = 6 : spent cold regeneration gas outlet

Also shown in Figure 4 are six common sequencing valves and three common control valves:
Valve 03: hot regeneration gas inlet from battery limit (heated retentate);
Valve 04: spent hot regeneration gas outlet to battery limit (hydrocarbon recycle to reformer feed);
Valve 05: cold fuel gas inlet from battery limit (membrane permeate or other fuel stream);
Valve 06: spent cold fuel gas outlet to battery limit (fuel to fired heater);
Valve 07: dryer bypass for hot regeneration gas;
Valve 08: dryer bypass for cold regeneration gas;
Valve 01: pressurization control valve;
Valve 09: depressurization 1 control valve (prior to heating) to purge gas recycle compressor last stage suction; and
Valve 10: depressurization 2 control valve (prior to cooling) to purge gas recycle compressor first or second or third stage suction inlet.

Although four vessels, six sequencing valves, six common sequencing valves, and three common control valves are shown in Figure 4, other arrangements and numbers of vessels and valves for each type can be used.

An example of a dryer sequence for the four vessels and valves using no stand-by step is given in Table 1 below.

**Table 1 - four-bed dryer sequence without stand-by step**

| Step | 1 | 2 | 3 | 4 | 5 | 6 | 7 | 8 |
|---|---|---|---|---|---|---|---|---|
| V1 | REPRESS | DRY | DRY | DRY | DEPRESS 1 | HEATING | DEPRESS 2 | COOLING |
| 11 | closed | OPEN | OPEN | OPEN | closed | closed | closed | closed |
| 12 | closed | OPEN | OPEN | OPEN | closed | closed | closed | closed |
| 13 | closed | closed | closed | closed | OPEN | OPEN | closed | closed |
| 14 | OPEN | closed | closed | closed | closed | OPEN | closed | closed |
| 15 | closed | closed | closed | closed | closed | closed | OPEN | OPEN |
| 16 | closed | closed | closed | closed | closed | closed | closed | OPEN |

| V2 | DRY | DRY | DEPRESS 1 | HEATING | DEPRESS 2 | COOLING | REPRESS | DRY |
|---|---|---|---|---|---|---|---|---|
| 21 | OPEN | OPEN | closed | closed | closed | closed | closed | OPEN |
| 22 | OPEN | OPEN | closed | closed | closed | closed | closed | OPEN |
| 23 | closed | closed | OPEN | OPEN | closed | closed | closed | closed |
| 24 | closed | closed | closed | OPEN | closed | closed | OPEN | closed |
| 25 | closed | closed | closed | closed | OPEN | OPEN | closed | closed |
| 26 | closed | closed | closed | closed | closed | OPEN | closed | closed |

| V3 | DEPRESS 1 | HEATING | DEPRESS 2 | COOLING | REPRESS | DRY | DRY | DRY |
|---|---|---|---|---|---|---|---|---|
| 31 | closed | closed | closed | closed | closed | OPEN | OPEN | OPEN |
| 32 | closed | closed | closed | closed | closed | OPEN | OPEN | OPEN |
| 33 | OPEN | OPEN | closed | closed | closed | closed | closed | closed |
| 34 | closed | OPEN | closed | closed | OPEN | closed | closed | closed |
| 35 | closed | closed | OPEN | OPEN | closed | closed | closed | closed |
| 36 | closed | closed | closed | OPEN | closed | closed | closed | closed |

| V4 | DEPRESS 2 | COOLING | REPRESS | DRY | DRY | DRY | DEPRESS 1 | HEATING |
|---|---|---|---|---|---|---|---|---|
| 41 | closed | closed | closed | OPEN | OPEN | OPEN | closed | closed |
| 42 | closed | closed | closed | OPEN | OPEN | OPEN | closed | closed |
| 43 | closed | closed | closed | closed | closed | closed | OPEN | OPEN |
| 44 | closed | closed | OPEN | closed | closed | closed | closed | OPEN |
| 45 | OPEN | OPEN | closed | closed | closed | closed | closed | closed |
| 46 | closed | OPEN | closed | closed | closed | closed | closed | closed |

| COMMON | | | | | | | | |
|---|---|---|---|---|---|---|---|---|
| 01 | OPEN | closed | OPEN | closed | OPEN | closed | OPEN | closed |
| 03 | closed | OPEN | closed | OPEN | closed | OPEN | closed | OPEN |
| 04 | closed | OPEN | closed | OPEN | closed | OPEN | closed | OPEN |
| 05 | closed | OPEN | closed | OPEN | closed | OPEN | closed | OPEN |
| 06 | closed | OPEN | closed | OPEN | closed | OPEN | closed | OPEN |
| 07 | OPEN | closed | OPEN | closed | OPEN | closed | OPEN | closed |
| 08 | OPEN | closed | OPEN | closed | OPEN | closed | OPEN | closed |
| 09 | OPEN | closed | OPEN | closed | OPEN | closed | OPEN | closed |
| 10 | OPEN | closed | OPEN | closed | OPEN | closed | OPEN | closed |

Table 2 depicts an example of a sequence in the case of a stand-by step being included between the end of the cooling step and the start of the next repressurization / drying step.

**Table 2 - four-bed dryer sequence with stand-by step.**

| Step | 1 | 2 | 3 | 4 | 5 | 6 | 7 | 8 | 9 | 10 | 11 | 12 |
|---|---|---|---|---|---|---|---|---|---|---|---|---|
| V1 | REPRESS | DRY | DRY | DRY | DRY | DRY | DEPRESS 1 | HEATING | HEATING | DEPRESS 2 | COOLING | STAND-BY |
| 11 | closed | OPEN | OPEN | OPEN | OPEN | OPEN | closed | closed | closed | closed | closed | closed |
| 12 | closed | OPEN | OPEN | OPEN | OPEN | OPEN | closed | closed | closed | closed | closed | closed |
| 13 | closed | cosed | closed | closed | closed | closed | OPEN | OPEN | OPEN | closed | closed | closed |
| 14 | OPEN | cosed | closed | closed | closed | closed | closed | OPEN | OPEN | closed | closed | closed |
| 15 | closed | cosed | closed | closed | closed | closed | closed | closed | closed | OPEN | OPEN | closed |
| 16 | closed | cosed | closed | closed | closed | closed | closed | closed | closed | closed | OPEN | closed |

| V2 | DRY | DRY | DRY | DEPRESS Σ | HEATING | HEATING | DEPRESS 2 | COOLING | STAND-BY | REPRESS | DRY | DRY |
|---|---|---|---|---|---|---|---|---|---|---|---|---|
| 21 | OPEN | OPEN | OPEN | closed | closed | closed | closed | closed | closed | closed | OPEN | OPEN |
| 22 | OPEN | OPEN | OPEN | closed | closed | closed | closed | dosed | closed | dosed | OPEN | OPEN |
| 23 | closed | cosed | closed | OPEN | OPEN | OPEN | closed | closed | closed | closed | closed | closed |
| 24 | closed | cosed | closed | closed | OPEN | OPEN | closed | closed | closed | OPEN | closed | closed |
| 25 | closed | cosed | closed | closed | closed | dosed | OPEN | OPEN | closed | dosed | closed | closed |
| 26 | closed | cosed | closed | closed | closed | dosed | closed | OPEN | closed | dosed | closed | closed |

| V3, | DEPRESS 1 | HEATING | HEATING | DEPRESS 2 | COOLING | STAND-BY | REPRESS | DRY | DRY | DRY | DRY | DRY |
|---|---|---|---|---|---|---|---|---|---|---|---|---|
| 31 | closed | cosed | closed | closed | closed | closed | closed | OPEN | OPEN | OPEN | OPEN | OPEN |
| 32 | closed | cosed | closed | closed | closed | closed | closed | OPEN | OPEN | OPEN | OPEN | OPEN |
| 33 | OPEN | OPEN | OPEN | closed | closed | closed | closed | dosed | closed | dosed | closed | closed |
| 34 | closed | OPEN | OPEN | closed | closed | closed | OPEN | closed | closed | dosed | closed | closed |
| 35 | closed | cosed | closed | OPEN | OPEN | closed | closed | closed | closed | dosed | closed | closed |
| 36 | closed | cosed | closed | closed | OPEN | closed | closed | closed | closed | dosed | closed | closed |

| V4 | DEPRESS 2 | COOLING | 3TAND-3Y | REPRESS | DRY | DRY | DRY | DRY | DRY | DEPRESS 1 | HEATING | HEATING |
|---|---|---|---|---|---|---|---|---|---|---|---|---|
| 41 | closed | cosed | closed | closed | OPEN | OPEN | OPEN | OPEN | OPEN | dosed | closed | closed |
| 42 | closed | closed | closed | closed | OPEN | OPEN | OPEN | OPEN | OPEN | dosed | closed | closed |
| 43 | closed | cosed | closed | closed | closed | closed | closed | closed | closed | OPEN | OPEN | OPEN |
| 44 | closed | closed | closed | OPEN | closed | closed | closed | closed | closed | dosed | OPEN | OPEN |
| 45 | OPEN | OPEN | closed | closed | closed | closed | closed | closed | closed | dosed | closed | closed |
| 46 | closed | OPEN | closed | closed | closed | closed | closed | closed | closed | dosed | closed | closed |

| COMMON | | | | | | | | | | | | |
|---|---|---|---|---|---|---|---|---|---|---|---|---|
| 01 | OPEN | cosed | closed | OPEN | closed | closed | OPEN | dosed | closed | OPEN | closed | closed |
| 03 | closed | OPEN | closed | closed | OPEN | closed | closed | OPEN | closed | dosed | OPEN | closed |
| 04 | closed | OPEN | closed | closed | OPEN | closed | closed | OPEN | closed | dosed | OPEN | closed |
| 05 | closed | OPEN | closed | closed | OPEN | closed | closed | OPEN | closed | dosed | OPEN | closed |
| as | closed | OPEN | closed | closed | OPEN | closed | closed | OPEN | closed | dosed | OPEN | closed |
| 07 | OPEN | cosed | closed | OPEN | closed | closed | OPEN | closed | closed | OPEN | closed | closed |
| 08 | OPEN | cosed | OPEN | OPEN | closed | OPEN | OPEN | closed | OPEN | OPEN | closed | OPEN |
| 09 | OPEN | closed | closed | OPEN | closed | closed | OPEN | closed | closed | OPEN | closed | closed |
| 10 | OPEN | cosed | closed | OPEN | closed | closed | OPEN | closed | closed | OPEN | closed | closed |

The sequences can be extended to cycles with more vessels for larger capacity systems, for example three vessels in drying in parallel with two vessels in regeneration, or four vessels in drying in parallel with two vessels in regeneration, or more. In general, with N vessels in parallel drying, an N+2 dryer system can be developed applying the concepts of the disclosure. As an example, N can be 2, 3, 4, 5, 6, 7, 8, 9, or 10. Each additional vessel can have the valve positions of the second drying vessel, i.e. vessel V2 during steps 1 & 2 (Table 1), or steps 1, 2 & 3 (Table 2), for the cycles without and with stand-by phase, respectively. The number of steps in the cycle can become (N+2) * 2 for a cycle without stand-by phase, and (N+2) * 3 for a cycle with stand-by phase. Each of the additional vessels can have six sequencing valves, without the need for adding any more common valves.

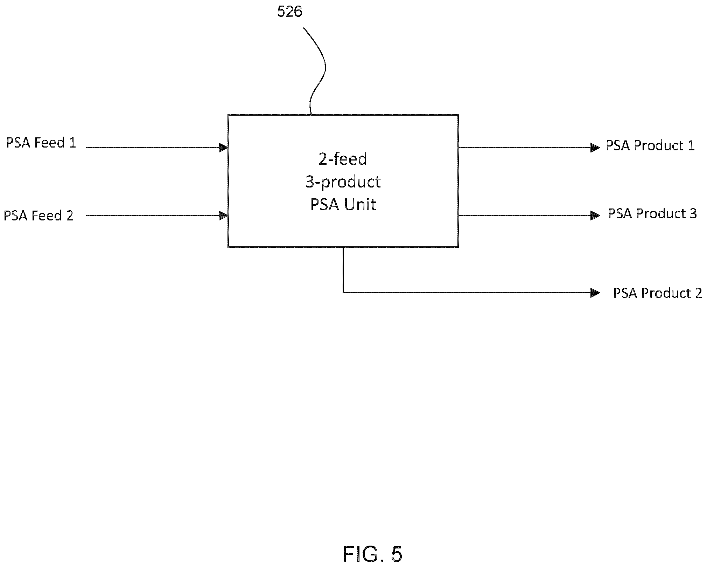

A PSA unit 26 usable in a hydrogen plant 100 with a dryer system 10 according to various aspects of the present disclosure can take a variety of forms. Examples of PSA units 26 with a single feed stream and two or three product streams have already been described with reference to Figures 1 and 2. In some examples, a PSA unit 526 may be provided which is a two-feed, three product PSA as shown in Figure 5. The PSA unit 526 may be configured to receive a first feed stream ("PSA Feed 1" in Figure 5) and a second feed stream ("PSA Feed 2" in Figure 5) at different pressure levels, and to generate three product streams at different pressure levels.

The PSA unit of Figure 5 can perform a variety of process, such as a process that can include one or more of the following steps:
- Step A: Adsorption of impurities from a first feed gas at high pressure, delivering a first product stream ("PSA Product 1" in Figure 5) at high pressure and high purity of the non-adsorbable component(s).
- Step B: A first co-current depressurization - pressure equalization, transferring non-adsorbable component(s) to another vessel of the PSA unit 526 at lower pressure in counter-current repressurization. Between 0 and 10 of these steps may be executed. For example, some PSA units can have between 1 and 4, some have 0, some have up to 8. Together with non-absorbable component(s) from the vessel void space, least adsorbable components can desorb and be transferred with the gas.
- Step C: A second co-current depressurization - provide purge, transferring non-adsorbable component(s) to another vessel at a lowest pressure in counter-current purging. Together with non-adsorbable component(s) from the void space, least adsorbable components can desorb and be transferred with the gas. Migration of heavy adsorbable components to higher adsorbent layer in the adsorbent beds is to be avoided and determine the end pressure level for this step.
- Step H: A third co-current depressurization - vent, transferring non-adsorbable component(s) and least adsorbable component to a third product stream ("PSA Product 3" of Figure 5, available at intermediate pressure. The intermediate pressure can be determined by the end pressure of this step. This pressure can be set in such a way that the migration of heavily adsorbable components to higher adsorbent layer in the adsorbent beds can be avoided.
- Step D: Counter-current depressurization - blowdown. Depressurizing the vessel to the lowest pressure in the cycle, evacuating the first quantity of heavily adsorbable components to the second product stream ("PSA Product 2" in Figure 5) at low pressure.
- Step E: Counter-current purging. A vessel at the lowest pressure can receive gas from the second co-current depressurization in which gas is rich in (a) non-adsorbable component(s) that can be used to purge less and least adsorbable components from the adsorbent, delivering the second quantity of adsorbed components to the second product stream at low pressure. In a situation in which the second co-current depressurization is replaced by the third co-current depressurization, the provide purge gas can be received from the second feed stream to the PSA unit 526 or from a part of the first product stream from step A.
- Step I: Counter-current or co-current repressurization - pre-pressurization. Vessel having completed the purge in counter-current purging receives gas from the second feed stream to the PSA unit 526, to pressurize the vessel to a pressure not exceeding the available pressure of the second PSA feed stream. The achievable pressure can depend on the availability of flow rate in the second PSA feed stream and the vessel volume.
- Step F: Counter-current repressurization - pressure equalization. Receiving non-adsorbable component from the other vessel in the first co-current depressurization, recovering the non-adsorbable component to the product stream when this vessel re-enters the adsorption of impurities step.
- Step G1: Counter-current repressurization - final repressurization with first product gas. Receiving part of the first product stream from the adsorption of impurities step to increase pressure back to the normal adsorption pressure. In some examples, this step can be replaced or combined with the next step.
- Step G2: Co-current repressurization - final repressurization with first feed gas. Receiving a part of the first feed gas from the adsorption of impurities step to increase the pressure back to the normal adsorption pressure.

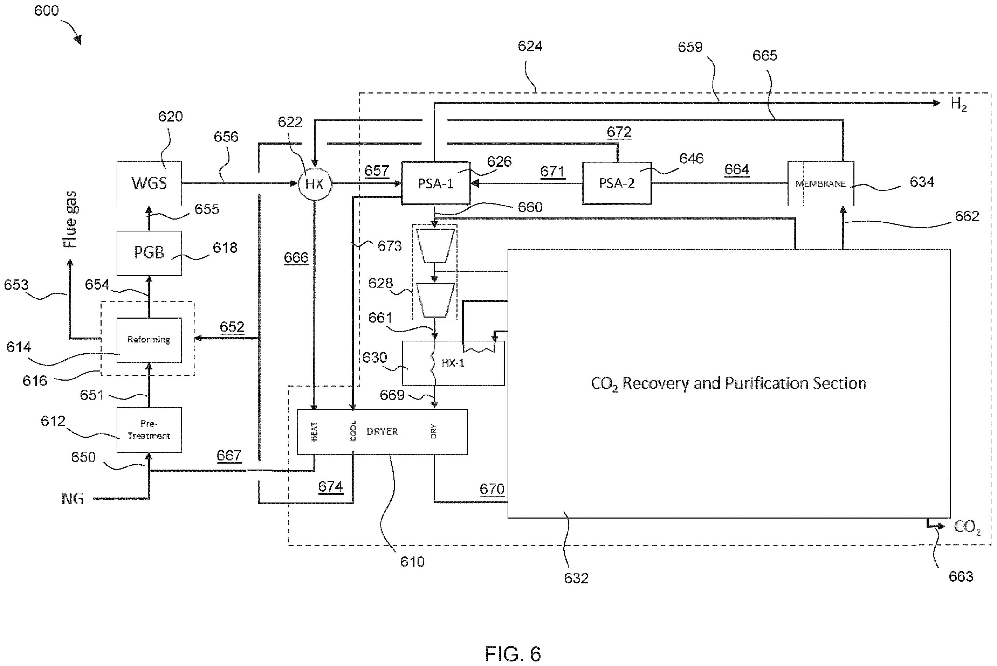

The PSA unit of Figures 1 and 2 show a single feed, two-product PSA unit, but it will be appreciated that a dual feed, three product PSA unit as described herein may be integrated into the hydrogen plant in a similar way, for example as described in the following in relation to in Figure 6. Figure 6 is a block diagram schematic of a hydrogen plant 600. The hydrogen plant 600 is similar to that discussed in relation to Figure 1 and Figure 2, and so only the differences will be outlined in detail. Similar units will be labelled with the same reference numeral, but with the prefix "6". The PSA unit of the hydrogen plant 600 is a two-feed, three-product PSA unit 626 according to one aspect of the present disclosure. For example, the PSA unit 626 may be substantially the same as the PSA unit 526 discussed in relation to Figure 5.

In this arrangement, the two-feed three-product PSA unit 626 is configured to be fed with the water-saturated syngas stream 657. In this way, the first feed gas stream (for example PSA Feed 1 in Figure 5) is the water-saturated syngas stream 657 from the heat exchanger and condensate removal section 622. In this example, the hydrogen-rich permeate stream 664 is fed to a second PSA unit 646 (indicated as PSA-2 in Figure 6). The second PSA unit 646 is configured to generate a high-pressure product stream 671 and a low-pressure purge gas stream 672. The high-pressure product stream 671 may be enriched in hydrogen but depleted in carbon components. The high-pressure product stream 671 may be at a pressure close to the pressure of the permeate stream 664. The low-pressure purge gas stream 672 may be depleted in hydrogen. The low-pressure purge gas stream 672 may be used as a fuel in the fired heater 616.

The high-pressure product stream 671 is directed to the dual feed three product PSA unit 626 as the second feed gas stream (for example PSA Feed 2 in Figure 5). The high-pressure product stream 671 may be at a lower pressure than the water-saturated syngas stream 657.

In the arrangement of Figure 6, the first product stream (for example PSA Product 1 of Figure 5) of the PSA unit 626 is the hydrogen-rich product stream 659. The second product stream (for example PSA Product 2 of Figure 5) is generated during step D/E. The second product stream is the hydrogen-depleted purge stream 660 that may be directed to the dryer system 610 (for example via the compressor 628 and/or the cooling unit 630) to generate a dry gas 670 that is fed into the CO2 recovery and purification section 632. The third product stream 673 (for example PSA Product 3 of Figure 5) is generated during a co-current depressurization step (e.g. during step H). The third product stream 673 may contain rejected inert gas components and hydrogen that can be used as low-carbon fuel. In this example, the third product stream 673 is used as a cooling medium 673 in the dryer system 610. The spent cooling medium gas 674 can exit the dryer system 610 and be used as fuel in the fired heater 616.

Splitting the permeate stream 664 using the second PSA 646 and a 2-feed, 3-product PSA unit 626 results in sending the same quantity of carbon molecules to the fuel stream 652, while entraining additional inert gas molecules from PSA unit 626 into the third product stream 673 avoiding their entry to the CO2 recovery section 632 with PSA purge gas stream 660, thereby reducing the power consumption of compressor 628 and simultaneously recovering more hydrogen into hydrogen product stream 659.

Examples of pressure and temperature values and/or ranges of the various streams of Figure 1 are shown in Table 3. It will be appreciated that these values are provided as examples only, and different pressures and temperatures may be obtained in alternative arrangements.

**Table 3**

| Stream | Temperature (°C) | Pressure (bar g) |
|---|---|---|
| Spent hot regeneration gas, 67 | 100-300 | 35.5 |
| Fuel stream, 52 | 40-300 | 0.3 |
| Water-saturated syngas, 57 | 40 | 21.2 |
| Hydrogen-depleted purge gas, 60 | 30 | 0.3 |
| Compressed hydrogen-depleted purge gas, 61 | 40 | 62 |
| Cooled stream, 69 | 15 | 61 |
| Water-depleted product, 70 | 20 | 60 |
| Hydrogen-rich product, 62 | 30-70 | 41 |
| Hydrogen-rich permeate, 64 | 35 | 3 |
| Hγdroqerr-depleted retentate, 65 | 30-70 | 39 |
| Hot regeneration gas, 66 | 300 | 37 |
| Spent regeneration gas, 68 | 40-300 | 2 |
| Hydrogen-rich product stream, 59 | 45 | 20 |

Examples of pressure and temperature values and/or ranges of the various streams of Figure 2 are shown in Table 4. It will be appreciated that these values are provided as examples only, and different pressures and temperatures may be obtained in alternative arrangements.

**Table 4**

| Stream | Temperature (°C) | Pressure (bar g) |
|---|---|---|
| Spent hot regeneration gas, 267 | 100-300 | 35.5 |
| Fuel stream, 252 | 40-300 | 0.3 |
| Water-saturated syngas, 257 | 40 | 21.2 |
| Hydrogen-depleted purge gas, 260 | 30 | 0.3 |
| Compressed hydrogen-depleted purge gas, 261 | 40 | 62 |
| Cooled stream, 269 | 15 | 61 |
| Water-depleted product, 270 | 20 | 60 |
| Hydrogen-rich product, 262 | 30-70 | 41 |
| Hydrogen-rich permeate, 264 | 35 | 3 |
| Hydrogen-depleted retentate, 265 | 30-70 | 39 |
| Hot regeneration gas, 266 | 300 | 37 |
| Third product, 271 | 35 | 3 |
| Spent regeneration gas, 268 | 40-300 | 2 |
| Hydrogen-rich product stream, 259 | 45 | 20 |

Examples of pressure and temperature values and/or ranges of the various streams of Figure 6 are shown in Table 5. It will be appreciated that these values are provided as examples only, and different pressures and temperatures may be obtained in alternative arrangements.

**Table 5**

| Stream | Temperature (°C) | Pressure (bar g) |
|---|---|---|
| Spent hot regeneration gas, 667 | 100-300 | 35.5 |
| Fuel stream, 652 | 40-300 | 0.3 |
| Water-saturated syngas, 657 | 40 | 21.2 |
| Hydrogen-depleted purge qas, 660 | 30 | 0.3 |
| Compressed hydrogen-depleted purge qas, 661 | 40 | 62 |
| Cooled stream, 669 | 15 | 61 |
| Water-depleted product, 670 | 20 | 60 |
| Hydrogen-rich product, 662 | 30-70 | 41 |
| Hydroqen-rich permeate, 664 | 30 | 10 |
| Hiyd roqen-depletedretentate, 665 | 30-70 | 39 |
| High-pressure product, 671 | 35 | 9 |
| Low-pressure purge qas, 672 | 25 | 0.3 |
| Cooling medium, 673 | 35 | 3 |
| Spent cooling medium gas, 674 | 40-300 | 2 |
| Hot regeneration gas, 666 | 300 | 37 |
| Hydrogen-rich product stream, 659 | 45 | 20 |

Various stream names have been used for purposes of clarity, containing terms such as "rich", "enriched", "depleted" and the like. It will be appreciated that these terms are intended to be non-limiting, and may be referred to by alternative names, such as outputs of the respective unit.

In some examples, streams referred to as "hydrogen-rich" or "hydrogen enriched" contain more hydrogen (by mol %) than CO2.Streams referred to as "hydrogen-depleted" may contain less hydrogen than CO2.Terms such as "CO2-rich", "CO2 enriched" may describe streams containing more CO2 (by mol %) than hydrogen. "CO2 depleted" may refer to streams containing less CO2 than hydrogen.

Hydrogen product streams from the plant, such as hydrogen-rich product stream 59, 259, 659 may have H2 concentrations of 99 mol% or higher, e.g. 99.5 mol%, 99.9 mol%, 99.99 mol% or higher. CO2 product streams from the plant, such as CO2-rich product stream 63, 263, 663, may have CO2 concentrations of 95 mol% or higher, for example, 99.0 mol%, 99.5 mol%, 99.9 mol%, 99.99 mol% or higher.

Stream 671 that is enriched in hydrogen may refer to a hydrogen concentration in excess of 50 mol%, optionally in excess of 70 mol%, in excess of 80 mol% or in excess of 90 mol%, or in excess of 98 mol%, such as 99 mol%. Terms such as "rich" and "depleted" to refer to PSA product streams are generally relative to the PSA feed streams. In this way, "rich" indicates an increase in the respective component's concentration compared to the feed, and "depleted" refers to a decrease in the respective component's concentration, relative to the concentration of the same component in the feed inlet stream.

References to pressures in stream names is also intended to provide clarity. These terms are intended to be non-limiting, and may be referred to by alternative names, such as outputs of the respective unit. References to "high pressure" may refer to a pressure in excess of 5 bar g, optionally 15 bar g to 25 bar g or higher up to 35 bar g, but can go as high as 55 to 80 bar g in some applications. With respect to the PSA unit, "high pressure" may be required for the first PSA feed gas stream, to drive the adsorption step that is facilitated at a higher pressure. References to "low pressure" is intended to mean lower than the "high pressure", for example that is required for the PSA feed gas and/or adsorption steps. When related to the PSA purge gas or lowest pressure stream, this typically refers to a pressure near atmospheric pressure, such as 0.3 to 0.5 bar g, exceptionally up to 1 or 4.5 bar g. In some arrangements, "low pressure" refers to pressures below atmospheric pressure, for example vacuum conditions. This subatmospheric pressure could be between 0.1 to 0.99 bar absolute. This pressure may be required for the purging step, during which the adsorbed components need to desorb which is facilitated by a lower pressure. "Intermediate pressure" as used herein refers to a pressure level between the "low" and "high" pressure levels in the PSA unit. intermediate pressure typically refers to pressures in the order of 2 - 4 bar g, and typically less than half of the pressure of the first feed step to benefit from some desorption effects.

The foregoing description of the disclosure, including illustrated aspects and examples has been presented only for the purpose of illustration and description and is not intended to be exhaustive or to limit the disclosure to the precise forms disclosed. Numerous modifications, adaptations, and uses thereof will be apparent to those skilled in the art without departing from the scope of this disclosure. Aspects and features from each disclosed example may be combined with any other example.

## Claims

1. A method for recovering waste heat and water vapor from a dryer system integrated in a hydrogen plant, the method comprising:
receiving regeneration gas from a downstream unit of the hydrogen plant;
using heat from the hydrogen plant to heat at least a part of the regeneration gas and form spent regeneration gas through a heating step and a cooling step;
recycling spent regeneration gas back to the hydrogen plant that uses heat from the spent regeneration gas; and
using desorbed water in the spent regeneration gas as process steam in the hydrogen plant.

2. The method of claim 1, further comprising:
producing a syngas by reacting a hydrocarbon feed with steam in a reforming section and with heat from a fired heater that outputs a flue gas stream;
recovering heat from the flue gas stream in a convection section and using heat recovered from the flue gas stream to generate steam and to provide heat for processes;
cooling the syngas to generate steam or exchange heat for other process streams and subjecting the syngas to at least one step of water gas shift reaction conversion;
subsequent or concurrent to cooling the syngas, removing condensate from the syngas to form a water-saturated syngas stream and a process condensate stream;
feeding the water-saturated syngas stream to a hydrogen and carbon dioxide (CO2) recovery section that generates, from the water-saturated syngas stream, a hydrogen-rich product stream, a CO2-rich product stream, and at least one additional product stream, wherein the hydrogen and CO2 recovery section includes the dryer system;
feeding at least part of the at least one additional product stream to a membrane system of the hydrogen and CO2 recovery section to generate a hydrogen-rich permeate stream and a hydrogen-depleted retentate stream;
heating the hydrogen-depleted retentate stream from the membrane system using heat from the hydrogen plant to form a hot regeneration gas for the dryer system to be used as the regeneration gas in the heating step of regeneration;
feeding the hydrogen-rich permeate stream from the membrane system to the dryer system as the regeneration gas to be used during the cooling step of regeneration;
recycling spent hot regeneration gas containing the desorbed water from the heating step of the dryer system to an inlet of the reforming section of the hydrogen plant to recover heat and desorbed water as process steam from the hot regeneration gas; and
recycling spent regeneration gas from the cooling step of the dryer system to be used as fuel in the fired heater to recover heat as pre-heated fuel;
wherein the method optionally further comprises treating a hydrocarbon feed in a feed pre-treatment section of the hydrogen plant to remove impurities in the hydrocarbon feed upstream of the reforming section.

3. The method of any of the previous claims, wherein the dryer system is a temperature-swing adsorption dryer system.

4. The method of claim 3, wherein the temperature-swing adsorption dryer system includes a plurality of adsorber vessels, each adsorber vessel of the plurality of adsorber vessels being associated with a plurality of sequencing valves.

5. The method of claim 4, wherein the plurality of sequencing valves includes:
a first valve for a feed gas inlet;
a second valve for a dry product gas outlet;
a third valve for a hot generation gas inlet;
a fourth valve for a spent hot regeneration gas outlet;
a fifth valve for a cold regeneration gas inlet; and
a sixth valve for a spent cold regeneration gas outlet.

6. The method of any of claims 3 to 5, wherein the temperature-swing adsorption dryer system includes a plurality of common sequencing valves and a plurality of common control valves.

7. The method of claim 6, wherein the plurality of common sequencing valves comprises:
a first common valve for a hot generation gas inlet from battery limit;
a second common valve for a spent hot regeneration gas outlet to the battery limit;
a third common valve for a cold fuel gas inlet from the battery limit;
a fourth common valve for a spent cold fuel gas outlet to the battery limit;
a fifth common valve for a dryer system bypass for hot regeneration gas; and
a sixth common valve for a dryer system bypass for cold regeneration gas, wherein the plurality of common control valves comprises:
a first common control valve that is a pressurization control valve;
a second common control valve that is a first depressurization control valve used prior to heating; and
a third common control valve that is a second depressurization control valve used prior to cooling.

8. The method of any of claims 2 to 7, wherein the hydrogen and CO2 recovery section further comprises:
a pressure-swing adsorption (PSA) unit;
a PSA gas compressor;
a PSA purge gas cooling system; and
a CO2 recovery and purification section.

9. The method of claim 8, wherein the PSA unit receives the water-saturated syngas stream and generates the hydrogen-rich product stream and a PSA purge gas stream; wherein the PSA gas compressor optionally compresses the PSA purge gas stream; and wherein the PSA purge gas cooling system optionally cools the compressed PSA purge gas stream to feed to the dryer system.

10. The method of claim 9, wherein the CO2 recovery and purification section receives product gas from the dryer system and generates the CO2 product stream and the at least one additional product stream.

11. The method of any of claims 8 to 10, wherein the PSA unit is a three product PSA unit that receives the water-saturated syngas stream and generates the hydrogen-rich product stream, a PSA purge gas stream and a third product stream used for cooling the dryer system and/or as fuel in a fired heater of the hydrogen plant.

12. The method of any of claims 8 to 10, wherein the PSA unit is a two-feed, three product PSA unit; wherein the PSA unit optionally receives a first feed stream and a second feed stream at different pressure levels, and generates three product streams at different pressure levels.

13. The method of claim 12, wherein the PSA unit receives the water-saturated syngas as a first feed stream and a hydrogen-rich gas as a second feed stream, wherein the PSA unit generates the hydrogen-rich product stream, a PSA purge gas stream and a third product stream that is used for cooling in the dryer system; wherein the second feed stream is optionally at a lower pressure than the first feed stream; wherein the hydrogen-rich product stream is optionally generated at a pressure greater than the PSA purge gas stream and the third product stream and wherein the third product stream has a pressure greater than the PSA purge gas stream.

14. The dryer system integrated in the hydrogen plant configured to perform the method of any of claims 1 to 13.

15. A hydrogen plant comprising an integrated dryer system, the dryer system comprising:
at least one adsorbent bed configured to receive a feed stream containing water and adsorb at least part of the water to produce a water-depleted product stream;
a regeneration section configured to heat at least one adsorbent bed to desorb at least part of the water from the adsorbent bed and configured to cool the adsorbent bed after desorbing at least part of the water therefrom;
one or more regeneration gas inlet line arranged to fluidly couple a unit of the hydrogen plant to the dryer system so as to transfer regeneration gas from the hydrogen plant to the regeneration section for heating or cooling the adsorbent bed to form a spent regeneration gas containing desorbed water;
at least one recycle line arranged to couple the dryer system to one or more units of the hydrogen plant so as to transfer spent regeneration gas and desorbed water from the dryer system to the hydrogen plant such that heat and desorbed water from the spent regeneration gas can be used in the hydrogen plant.
